# EUROPEAN PATENT APPLICATION

(11) **EP 1 243 920 A2**
(43) Date of publication of application: **25.09.2002**
(21) Application number: 02251626.4
(22) Date of filing: 07.03.2002
(51) Int. Cl.: G01N 25/28, G01N 27/16

(54) **Unreacted gas detector and unreacted gas sensor**

(30) Priority: 23.03.2001 JP 2001084749
(71) Applicant: FUJIKIN INCORPORATED, Osaka (JP)
(72) Inventor: Komehana, Katsunori, Fujikin Incorporated, Osaka (JP); Minami, Yukio, Fujikin Incorporated, Osaka (JP); Morimoto, Akihiro, Fujikin Incorporated, Osaka (JP); Kawada, Koji, Fujikin Incorporated, Osaka (JP); Honiden, Teruo, Fujikin Incorporated, Osaka (JP); Nakamura, Osamu, Fujikin Incorporated, Osaka (JP); Hirai, Toru, Fujikin Incorporated, Osaka (JP); Ikeda, Nobukazu, Fujikin Incorporated, Osaka (JP)
(74) Representative: Crump, Julian Richard John

(57) **Abstract**

An unreacted gas detector including a reactor unit for producing a target gas by way of reacting material gases in its reaction chamber, a sensor body connected to the reactor unit, a measurement space provided in the sensor body for allowing the target gas to flow, an unreacted gas sensor having a temperature measurement section covered by a catalyst layer and disposed inside the measurement space, and a target gas sensor with its temperature measurement section disposed in the sensor body. Any unreacted gas remaining in the target gas is reacted by the catalyst layer so that a resulted temperature change is detected by the unreacted gas sensor, and a target gas temperature is measured by a target gas temperature sensor, thus finding an unreacted gas concentration from a temperature difference between the temperatures obtained by the unreacted gas sensor and the target gas temperature sensor.

## Description

### BACKGROUND OF THE INVENTION

### 1. Field of the Invention

The present invention relates to an unreacted gas detector used in an apparatus that produces a target gas from combustible and flammable material gases, such as a water-producing reactor used in a semiconductor manufacturing apparatus, and more particularly to an unreacted gas detector and an unreacted gas sensor for finding the combustible material gas concentration or flammable material gas concentration that remains in an unreacted state in the produced target gas.

### 2. Prior Art

A water-producing reactor used in a semiconductor manufacturing apparatus will be used as an example below to illustrate the present invention.
In the process of manufacturing a semiconductor, high purity water is required in widely varying amounts, from just a few dozen sccm to several thousand sccm. Hydrogen gas and oxygen gas are supplied as material gases in amounts stoichiometrically calculated from the required amount of water, and high purity water vapor is produced as these gases are reacted at a temperature under their ignition temperature inside a water-producing reactor. The "sccm" referred to here is the gas flow expressed in cc/min in a normal state.

As of now, however, it is nearly impossible to achieve a stoichiometric ratio of 100% in the reaction, and traces of hydrogen gas remain along with oxygen gas in an unreacted state in the produced water vapor. Because hydrogen gas is combustible, there is the danger of explosion if it remains in too large an amount. Thus, once the amount of unreacted hydrogen gas goes over a certain level, the supply of material gas must be shut off for safety purposes. Accordingly, the concentration of the unreacted hydrogen gas in the water vapor (the target gas) must be monitored constantly. Water production conditions can vary over an extremely wide range, from an H₂/O₂ ratio of less than two (2) (oxygen excess) to a ratio over two (hydrogen excess); and it is, therefore, necessary to monitor the trace oxygen gas in the water vapor in the case of an excess of hydrogen. The inventors have invented such a sensor for unreacted combustible gases as disclosed in Japanese Patent Application Laid-Open (Kokai) No. H11-30602.

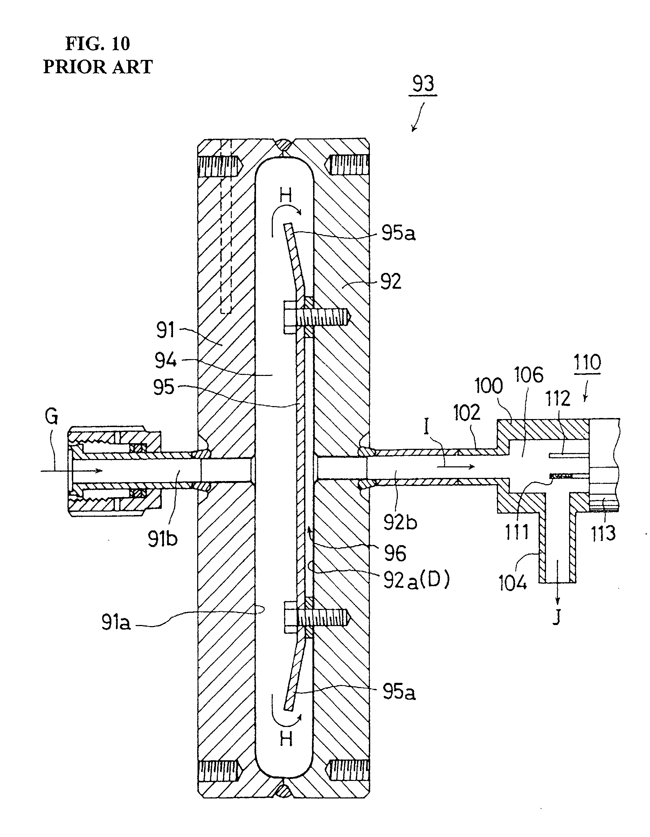

Figure 10 shows a large-flow water-producing reactor to which a conventional unreacted gas sensor is connected.
In this Figure 10, the reference numeral 91 is an inlet-side reactor unit member, 91a is the inner wall of the inlet-side reactor unit member, 91b is a material gas supply port, 92 is an outlet-side reactor unit member, 92a is the inner wall of the outlet-side reactor unit member, 92b is a water vapor take-off port, 93 is a reactor unit, 94 is an inlet-side internal space, 95 is a disk-shaped reflector, 95a is the peripheral edge of the reflector, and 96 is a micro-gap space formed between the reflector 95 and the outlet-side reactor unit member 92.

The reference numeral 110 is an unreacted gas sensor connected to the reactor unit 93, 100 is a sensor body, 102 is a water vapor inlet pipe, 104 is a water vapor outlet pipe, 106 is a measurement space, 111 is a first sensor, 112 is a second sensor, and 113 is a sensor holder.

A platinum coating catalyst layer D is formed on the outlet-side reactor unit member inner wall 92a. This platinum coating catalyst layer D is produced by forming layers of a platinum coating over a TiN or other barrier film, and the platinum coating film is exposed in the space.

In operation, hydrogen gas and oxygen gas are supplied in a specific ratio in the direction of arrow G, and these material gases move from the material gas supply port 91b into the inlet-side internal space 94. The material gases move into the micro-gap space 96 (which is behind the reflector 95), tracing a flow line in the direction of the arrows H.

The hydrogen gas and oxygen gas (material gases) are radicalized by contact with the platinum coating catalyst layer D formed on the inner wall 92a. The radicalized hydrogen and oxygen are in a highly active state and bonded instantly at temperatures under the ignition temperature, thus producing water vapor without high-temperature combustion.

This radical reaction is brought about by the platinum coating catalyst layer D of the inner wall 92a. Since a reaction proceeds faster as the probability of collision between molecules increases, the water production reaction proceeds well in the micro-gap space 96 in which the spatial volume has been drastically reduced. The produced water vapor and the material gas that is still in an unreacted state flow out of the water vapor take-off port 92b to the unreacted gas sensor 110 in the direction of arrow I.

The water vapor enters the water vapor inlet pipe 102 flows through the measurement space 106 and out the water vapor outlet pipe 104 in the direction of arrow J; and then the water vapor is supplied to a subsequent step. The first sensor 111 and the second sensor 112 are disposed so that they are exposed inside the measurement space 106.

First, the temperature of the produced water vapor (the target gas temperature) T₀ is measured by the second sensor 112. The platinum coating catalyst layer is provided at the distal end of the first sensor 111, and any remaining unreacted hydrogen gas reacts with unreacted oxygen gas on the surface of this platinum coating catalyst layer, producing reaction heat.

The reaction heat thus produced raises the surface temperature of the first sensor 111, and the temperature T of the first sensor 111 is sensed. This temperature T should be higher than the water vapor temperature T₀ by an amount corresponding to the reaction heat. This temperature increase is believed to correlate to the unreacted hydrogen gas concentration. Therefore, the unreacted hydrogen gas concentration is detected from the temperature difference ΔT = T - T₀.

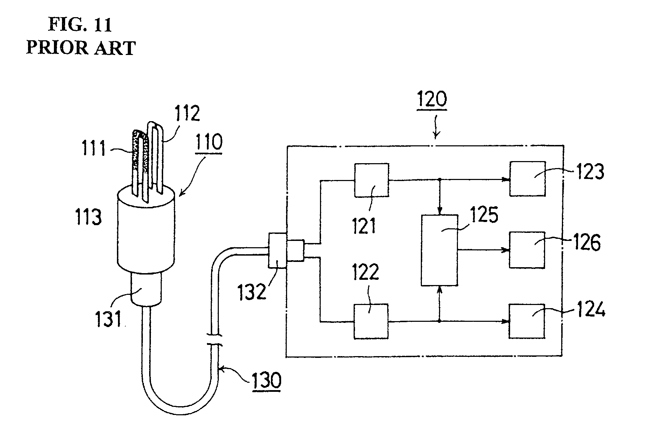

Figure 11 is a block diagram used for the measurement of the temperature difference ΔT.
The first sensor 111 and the second sensor 112 consist of thermocouples and are both set up on the sensor holder 113. These sensors are connected to a detector unit 120 by a connector cable 130 having connectors 131 and 132.

The temperature T of the first sensor 111 is sensed by a first temperature detector 121 and displayed on a first temperature display 123. The water vapor temperature T₀ is sensed by a second temperature detector 122 and displayed on a second temperature display 124. The temperature difference ΔT (= T - T₀) is calculated by the temperature differential detector 125 from the temperatures T and T₀, and displayed on a temperature differential display 126. If the temperature difference ΔT is over a certain amount, an alarm will be sounded by an alarm device (not shown), requiring some action be taken, such as shutting off of the supply of material gas.

However, the unreacted gas sensor 110 described above has a problems which is that the first sensor 111 and the second sensor 1detector 12 are located close together inside the measurement space 106. Heat is continuously generated by the reaction between the unreacted hydrogen gas and oxygen gas on the surface of the first sensor 111, and naturally this heat is conducted to the nearby second sensor 112. This thermal conduction raises the measured water vapor temperature T₀, and as a result the temperature difference ΔT ends up appearing smaller than it really is.

More specifically, the temperature T of the first sensor 111 is believed to accurately reflect the amount of reaction heat. The temperature T₀ of the second sensor 112, on the other hand, is higher than the original water vapor temperature due to the effect of local heat generation, and this effect creates an error. In other words, the temperature difference ΔT makes the unreacted hydrogen gas concentration appear to be lower than it actually is, and there is the danger that the amount of unreacted hydrogen will be deemed safe when it is in fact in the danger zone, resulting in malfunction.

### SUMMARY OF THE INVENTION

Accordingly, it is an object of the present invention to provide an unreacted gas detector and an unreacted gas sensor with which the temperatures can be measured accurately, allowing the concentration of the combustible unreacted gas concentration admixed in the target gas to be accurately monitored, and ensuring the alarm to function properly.

The above object is accomplished by a unique structure for an unreacted gas detector that comprises:
a reactor unit that produces a target gas by way of reacting combustible and flammable material gases in a reaction chamber thereof;
a sensor body provided in contact with the reactor unit;
a measurement space provided in the sensor body so as to allow the target gas to flow therethrough;
an unreacted gas sensor having a temperature measurement section that is covered by a reaction promoting catalyst layer and is disposed inside the measurement space; and
a target gas temperature sensor for sensing a gas temperature by means of a temperature measurement section thereof, the temperature measurement section being disposed in the reactor unit or in a predetermined section of the sensor body,
wherein any unreacted gas remaining in the target gas is reacted by the reaction promoting catalyst layer so that a resulted temperature change is detected by the temperature measurement section of the unreacted gas sensor, and a target gas temperature is measured by the temperature measurement section that is of the target gas temperature sensor and disposed in the reactor unit or in the sensor body, thus finding a unreacted gas concentration from a temperature difference between a temperature obtained by the unreacted gas sensor and a temperature of the target gas.

The above object is further accomplished by another unique structure for an unreacted gas detector that comprises:
a reactor unit that produces a target gas by way of reacting combustible and flammable material gases in a reaction chamber thereof;
a sensor body provided in contact with the reactor unit;
a measurement space provided in the sensor body so as to allow the target gas to flow therethrough; and
an unreacted gas sensor having a temperature measurement section that is covered by a reaction promoting catalyst layer and is disposed inside the measurement space;
wherein any unreacted gas remaining in the target gas is reacted by the reaction promoting catalyst layer so that a resulted temperature change is detected by the temperature measurement section of the unreacted gas sensor, and a target gas temperature is estimated from operating conditions of the reactor unit, thus finding a unreacted gas concentration from a temperature difference between a temperature obtained by the unreacted gas sensor and an estimated temperature of the target gas.

In the above structures, the reactor unit is a water-producing reactor that produces water vapor from hydrogen gas and oxygen gas, and the unreacted gas is unreacted hydrogen gas or unreacted oxygen gas.
Furthermore, in the present invention the reactor unit is a water-producing reactor that comprises: an inlet-side reactor unit member that supplies the material gases to an inlet-side space, an outlet-side reactor unit member that sends a produced water vapor to a water vapor supply path, a reflector sandwiched in an airtight fashion between the inlet-side reactor unit member and the outlet-side reactor unit member, the reflector being provided with a plurality of spray holes that communicates with the inlet-side space, a reaction chamber having a gap between the reflector and the outlet-side reactor unit member, a nozzle hole formed in the outlet-side reactor unit member so that a water vapor supply path of the outlet-side reactor unit member communicates with the reaction chamber, and a coating catalyst layer provided on an end surface of the outlet-side reactor unit member that faces the reflector. In this reactor unit, water vapor is produced by a reaction of the material gases, that are hydrogen and oxygen gasses, under a non-combustion state, the reaction being occurred by a catalytic action of the coating catalyst layer when the material gases flow into the reaction chamber through the spray holes of the reflector.

Furthermore, the above object is accomplished by a unique structure for an unreacted gas sensor that is comprised of an elongated sensor body, a temperature measurement section that has a reduced diameter portion and is provided at the distal end of this sensor body, and a temperature measuring catalyst layer provided on the temperature measurement section.

In this unreacted gas sensor, the temperature measuring catalyst layer is a platinum coating catalyst layer.

Also, the unreacted gas sensor is made of thermocouples.

### BRIEF DESCRIPTION OF THE DRAWINGS

Figure 1 is a vertical cross section of a small-flow water-producing reactor to which the unreacted gas detector according to the present invention has been attached;
Figure 2 is a cross sectional view taken along the line 2-2 in Figure 1;
Figure 3 is a cross sectional view taken along the line 3-3 in Figure 1;
Figure 4A and 4B are perspective views of the reflector;
Figure 5 is a diagram showing the operation of a small-flow water-producing reactor;
Figure 6 is an enlarged illustration of the unreacted gas sensor;
Figure 7 is an enlarged illustration of another unreacted gas sensor;
Figure 8 is a graph showing the amount of water vapor versus the temperature of an unreacted gas sensor that has a reduced-diameter temperature measurement section;
Figure 9 is a response graph for unreacted gas sensors, in which the reduced-diameter temperature measurement section (reducer type) is compared to the same-diameter temperature measurement section (straight type);
Figure 10 is a vertical cross sectional view taken of a large-flow water-producing reactor to which a conventional unreacted gas sensor is connected; and
Figure 11 is a block diagram showing the manner of measurement of the temperature difference ΔT.

### DETAILED DESCRIPTION OF THE INVENTION

Embodiments of the unreacted gas detector and the unreacted gas sensor used therein according to the present invention will be described in detail below with reference to the accompanying drawings.

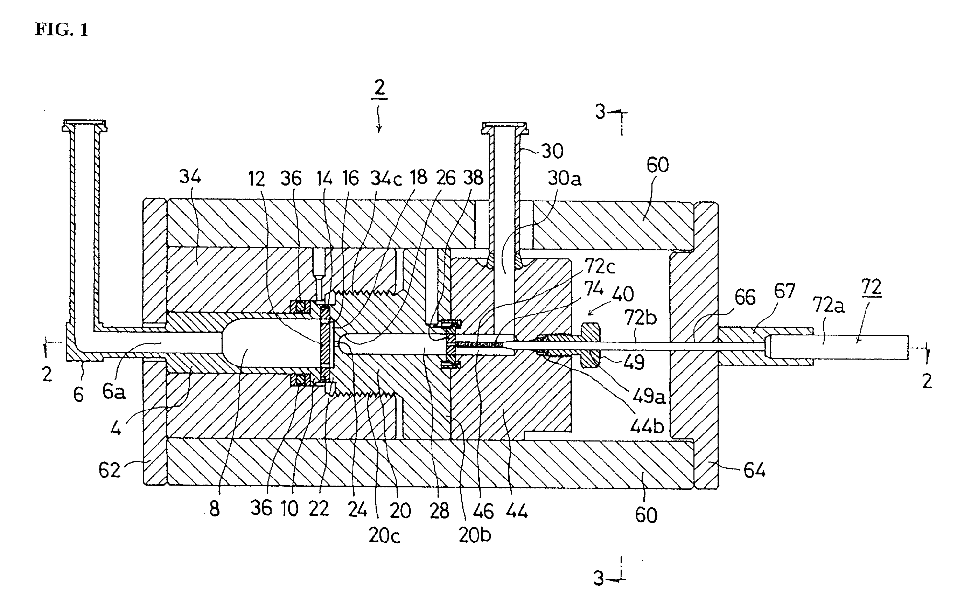

Figures 1 to 5 illustrate a small-flow water-producing reactor, and a unreacted gas detector according to the present invention is attached thereto.

In Figures 1 through 5, the reference numeral 2 is a small-flow water-producing reactor, 4 is an inlet-side reactor unit member, 6 is a material gas supply pipe, 6a is a material gas supply port, 8 is an inlet-side space, 10 is an inlet-side flange, 12 is a reflector, 12a is the inner end face of the reflector, 12b is the outer end face of the reflector, 14 is a peripheral edge, 16 is a spray hole, 18 is a reaction chamber, 20 is an outlet-side reactor unit member, 20a is the end face of the outlet-side reactor unit member, 20c is threads, 20d is a temperature measurement hole, 21 is a platinum coating catalyst layer, 21a is a barrier film, 21b is a platinum coating film, 22 is an outlet-side flange, 22a is the inner peripheral surface of the outlet-side flange, 24 is a nozzle hole, 24a is a nozzle inner surface, 26 is a diffuser, 28 is a water vapor supply path, 30 is a water vapor take-off pipe, 30a is a water vapor take-off port, 34 is a nut, 34c is threads, and 36 is a bearing.

Furthermore, the reference numeral 38 is an orifice that doubles as a gasket, 40 is an unreacted gas detector, 44 is a sensor body, 44a is a temperature measurement through-hole, 44b is a gas detection through-hole, 46 is a measurement space, 47 is a bolt, 47a is an attachment plate, 47c is a hole, 49 is a bolt, 49a is a through-hole, 60 is a cylindrical heater, 62 is an inlet-side lid, 64 is an outlet-side lid, 65 and 66 are holes, 67 is a protrusion, 70 is a target gas temperature sensor, 70a is a sleeve, 70b is a body, 70c is a temperature measurement section, 72 is an unreacted gas sensor, 72a is a sleeve, 72b is a sensor main body, 72c is a reduced-diameter temperature measurement section, 73 is a monitor for preventing the overheating of the reactor, 73b is the body of the monitor, 73c is a temperature measurement section, and 74 is a reaction promoting catalyst layer.

The relationship between the above-described components will be described below. The inlet-side reactor unit member 4 provided with the inlet-side flange 10 is connected to the small-diameter material gas supply pipe 6, and a mixed gas of hydrogen gas and oxygen gas in a specific ratio is supplied as the material gas from the material gas supply port 6a.

The outlet-side flange 22 is formed around the edge of the end face 20a of the outlet-side reactor unit member 20; and the nozzle hole 24, which has a tiny cross sectional area, is formed in the middle of the end face 20a. This nozzle hole 24 opens to the water vapor supply path 28 via the diffuser 26 which is in a bell shape. The water vapor supply path 28 is connected to the water vapor take-off port 30a of the water vapor take-off pipe 30, and the water vapor that is generated is supplied to a subsequent step through the water vapor supply path 28.

The reflector 12 is disposed between the inlet-side flange 10 and the outlet-side flange 22, and the peripheral edge 14 of the reflector 12 is sandwiched by and fixed by two flanges 10 and 22. This sandwich structure provided by the flanges 10 and 22 ensures an airtight seal. The reflector 12 is disk shaped, and a plurality of tiny spray holes 16 are formed on the inside of the peripheral edge 14 so as to be circularly spaced at regular intervals. These spray holes 16 communicate the inlet-side space 8 with the reaction chamber 18.

The threads 20c are formed around the outer periphery of the outlet-side reactor unit member 20. The bearing 36 is fitted around the outer periphery of the inlet-side reactor unit member 4, and the nut 34 is fitted over the outer periphery of this bearing 36. The threads 34c of the nut 34 are screwed onto the threads 20c of the outlet-side reactor unit member 20 to form the reactor unit.

With the screwing structure between the nut 34 and the outlet-side reactor unit member 20, the reflector 12 and the flanges 10 and 22 are securely fixed and integrated, thus ensuring a good durability of the water-producing reactor 2.

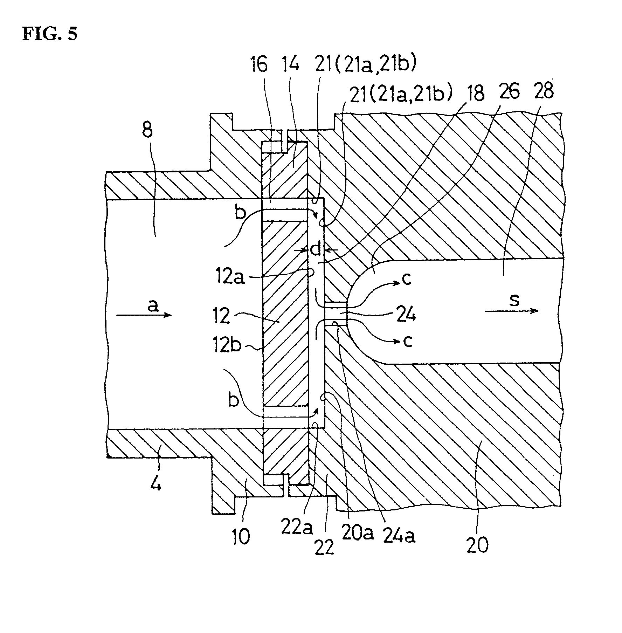

The reaction chamber 18 will now be described.
As best seen from Figure 5, thee inner end face 12a of the reflector 12 and the end face 20a of the outlet-side reactor unit member 20 face each other and are separated by a minute gap d, thus forming the reaction chamber 18. The periphery area of the reaction chamber 18 communicates with the inlet-side space 8 via the plurality of spray holes 16, and the center area of the reaction chamber 18 communicates with the water vapor supply path 28 via the nozzle hole 24.

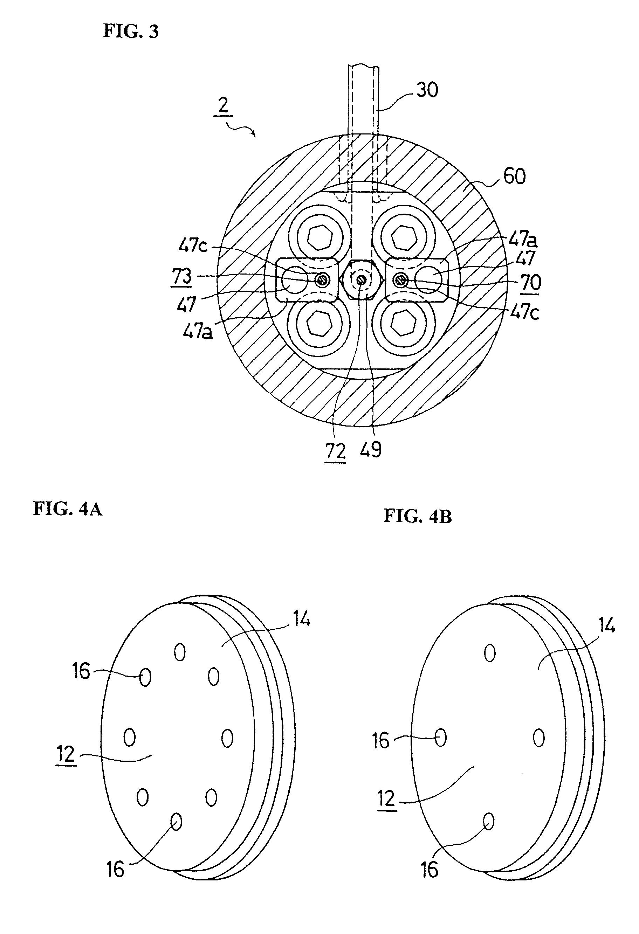

The reflector 12 used in the above structure is that shown in Figure 4A. In this reflector 12, eight spray holes 16 are opened in a circular configuration at regular intervals. The reflector 12 in Figure 4B is another example, and four spray holes 16 are formed in a circular configuration at regular intervals. Thus, the number and layout of the spray holes 16 can be varied as desired.

The cross sectional diameter of the spray holes 16 and the nozzle hole 24 can be adjusted as desired. In view of keeping the flow of water vapor small, 0.1 to 3 mm is preferable, and 0.5 to 2 mm is particularly good. With this setting of the diameter within such ranges, it is easy to keep the gas flow between just several dozen sccm to several hundred sccm.

From the standpoints of durability, corrosion resistance and heat resistance, it is best for the small-flow water-producing reactor 2 in this embodiment to be made from stainless steel. More specifically, the inlet-side reactor unit member 4, the outlet-side reactor unit member 20 and the reflector 12 are formed from SUS 316L stainless steel, and the nut 34 is formed from SUS 316.

The platinum coating catalyst layer 21 is formed on the surface of the end face 20a of the outlet-side reactor unit member 20. This platinum coating catalyst layer 21 is also formed on the inner peripheral surface 22a of the outlet-side flange 22. Likewise, the platinum coating catalyst layer 21 may be formed as needed on the inner end face 12a of the reflector 12 and the surface of the nozzle hole 24a. However, the platinum coating catalyst layer 21 is not necessary on the nozzle hole 24a and the inner end face 12a. Thus, forming the platinum coating catalyst layer 21 on the walls surrounding the reaction chamber 18 increases the amount of water that will be produced in the reaction chamber 18.

To form these platinum coating catalyst layers 21, the barrier film 21a made of TiN is formed on the surface of a stainless steel base, after which the platinum coating film 21b is built up over this barrier film 21a, with the platinum coating film 21b being formed on the outermost surface so as to activate the material gas. The barrier film 21a prevents diffusion and oxidation of the underlying stainless steel by the gas flowing over it and also acts to prevent the platinum coating film 21b from falling off. The platinum coating film 21b has a catalytic action that aids the water producing reaction of the material gas.

The thickness of the platinum coating film 21b is preferably 0.1 to 3 µm. In the shown embodiment, the platinum coating film 21b is formed in a thickness of about 1 µm. A thickness of about 0.1 to 5 µm is optimal for the barrier film 21a, and in this embodiment a TiN barrier film is formed in a thickness of about 2 µm.

When forming the barrier film 21a, first a suitable surface treatment is performed at the required locations on the surfaces of the inlet-side reactor unit member 4, the outlet-side reactor unit member 20, the reflector 12, etc., and oxidation films or passivation films of various metals formed naturally on the surface of stainless steel are removed. Then, the barrier film 21a is formed from TiN. In the shown embodiment, the TiN barrier film 21a is formed in a thickness of about 2 µm by ion plating.

TiC, TiCN, TiAlN, Al₂O₃, Cr₂O₃, SiO₂, CrN or the like can be used instead of TiN as the material for the barrier film. This is because these materials are non-catalytic and have excellent resistance to reduction and oxidation. As described above, the thickness of the barrier film is preferably 0.1 to 5 µm. The reason is that the barrier function will not be sufficiently obtained if the thickness is 0.1 µm or less; but if the thickness is over 5 µm, it will be more difficult to form the barrier film itself, and there is the danger that the barrier film may peel off due to a difference in thermal expansion during heating, for example.

In addition to the above-described ion plating, the method used to form the barrier film can be ion sputtering, vacuum vapor deposition or another PVD method, chemical vapor deposition (CVD), hot pressing, flame spraying, or the like.

Once the barrier film 21a has been formed, the platinum coating film 21b is then formed over it. In this embodiment, the platinum coating film 21b is formed by ion plating in a thickness of approximately 1 µm. The thickness of this platinum coating film is preferably about 0.1 to 3 µm, the reason being that catalytic activity will tend to falter over extended use if the thickness is 0.1 µm or less; however, if the thickness is 3 µm or greater, not only will the cost of the platinum coating film be higher, but there will also be virtually no difference in the catalytic activity or how long this activity lasts even if the thickness is 3 µm or greater, and in addition there is a danger of peeling caused by a difference in thermal expansion during heating, for example.

In addition to the above-described ion plating, the method used to form the platinum coating film 21b can be ion sputtering, vacuum vapor deposition, chemical vapor deposition, hot pressing, or the like. Electroplating can be used when the barrier film 21a is an electroconductive substance such as TiN, but electroless plating can also be used, regardless of the conductivity.

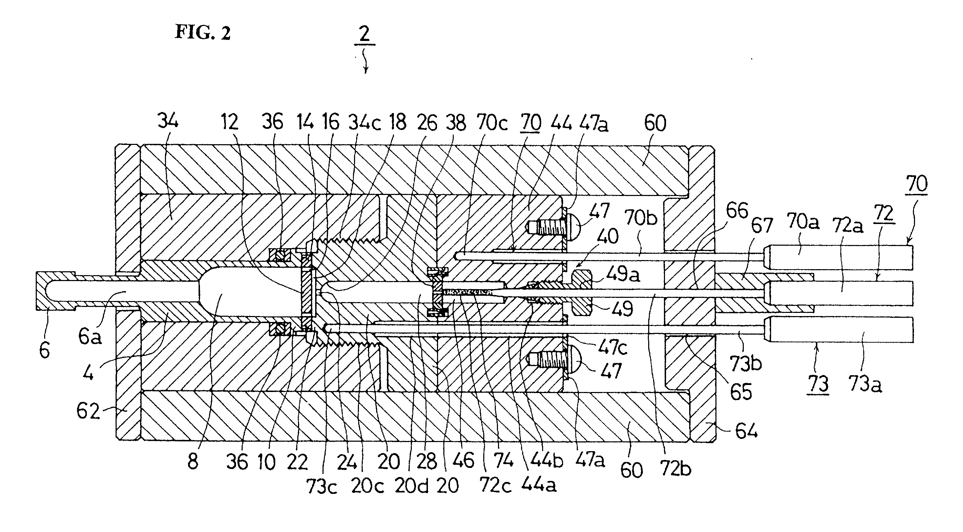

The unreacted gas detector 40 is installed on the downstream side of the outlet-side reactor unit member 20 as seen from Figures 1 and 2. The unreacted gas detector 40 includes the sensor body 44 that is provided in contact with the outlet-side reactor unit member 20, and the measurement space 46 formed in the interior of this sensor body 44 is connected to the water vapor supply path 28 via the orifice 38. The measurement space 46 communicates at a right angle with the water vapor take-off pipe 30 (see Figure 1).

The orifice 38 serves to concentrate the flow of the water vapor and send all the water vapor to the sensors, which raises the sensitivity of the sensors. The water vapor that has passed through the sensors is supplied from the water vapor take-off port 30a, through the water vapor take-off pipe 30, and to the subsequent step.

The target gas temperature sensor 70 is inserted in the hole 65 of the outlet-side lid 64 and in the temperature measurement through-hole 44a of the sensor body 44 and is fixed to the sensor body 44 by the bolt 47 and the attachment plate 47a. The temperature measurement section 70c of the target gas temperature sensor 70 extends to near the unreacted gas sensor 72 in the interior of the sensor body 44.

The target gas temperature sensor measures the temperature of the produced target gas, which in the shown embodiment is water vapor. When a water-producing reaction is conducted steadily for an extended period, it is believed that the outlet-side reactor unit member 20 and the sensor body 44 are in a state of thermal equilibrium with the temperature of the water vapor (target gas). In particular, it is believed that the temperature near the gas flow path of the sensor body 44, and especially near the orifice 38, the measurement space 46 and the water vapor take-off port 30a, is substantially the same as the water vapor temperature. Therefore, this water vapor temperature can be detected by the temperature measurement section 70c of the target gas temperature sensor 70 by way of measuring the temperature near the gas flow path of the outlet-side reactor unit member 20 or the sensor body 44, and particularly the temperature near the orifice 38. Since the sensor body 44 has a large thermal capacity, the temperature can be measured accurately even if the temperature measurement section 70c is the same in diameter as the sensor main body 70b.

The unreacted gas sensor 72 is inserted in the gas detection through-hole 44b of the sensor body 44 via the protrusion 67 and the hole 66 in the outlet-side lid 64. The unreacted gas sensor 72 is fixed to the sensor body 44 by the bolt 49. The temperature measurement section 72c of the unreacted gas sensor 72 is disposed inside the measurement space 46, through which the gas flows; and the distal end of the temperature measurement section 72c is located near the orifice 38. The temperature measurement section 72c is reduced to a smaller diameter than the sensor main body 72b of the sensor 72, and the platinum coating catalyst layer 74 is formed on its surface as a reaction promoting catalyst layer.

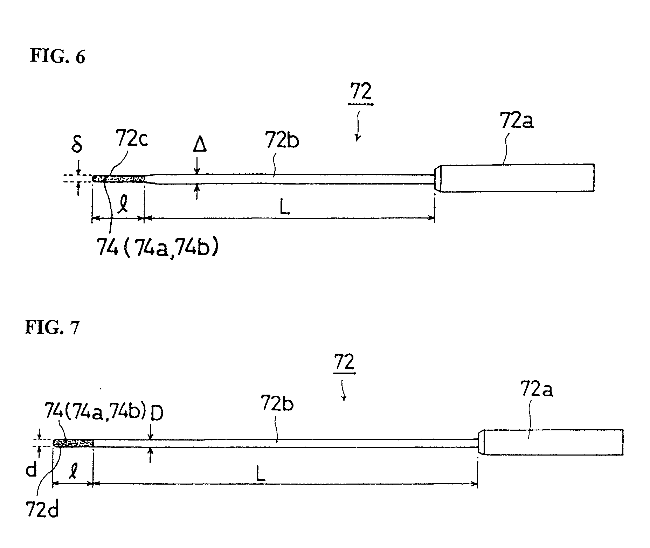

Figure 6 is an enlarged illustration of the unreacted gas sensor 72.
The sensor main body 72b has an elongated body shape and is provided at one end of the sleeve 72a, and the reduced-diameter temperature measurement section 72c is formed at the distal end thereof. The unreacted gas sensor 72 utilizes the reaction promoting catalyst layer 74 to forcibly react the unreacted hydrogen gas and unreacted oxygen gas remaining in the water vapor, thus measuring how much the gas temperature is raised by the heat of this reaction.

Therefore, if the temperature measurement section 72c is reduced in diameter as much as possible, its thermal capacity will be smaller and minute amounts of generated heat can be detected more efficiently. Accordingly, the temperature measurement section 72c is made thinner in diameter than the elongated sensor main body 72b, and the diameter δ of the temperature measurement section 72c is set smaller than the body diameter Δ. In this embodiment, the body length L is 100 mm, the body diameter Δ is 1.6 mm, the length 1 of the temperature measurement section 72c is 10 mm, and the diameter δ of the temperature measurement section is 1 (one) mm. The diameter reduction φ is calculated by δ/Δ, and in this case φ = 0.62.

This diameter reduction φ is preferably less than one (1), with a range of 0.1 to 0.9 being preferable. If the diameter reduction is under 0.1, machining will be difficult; and since the contact surface area is also reduced, this results in less reaction heat to be generated, which lowers the sensitivity and makes it difficult to accurately measure the unreacted gas concentration. If the diameter reduction is 0.9 or greater, to the contrary, gas detection will only be possible to the same extent as that of the elongated sensor main body 72b.

Furthermore, the monitor 73 for preventing the overheating of the reactor extends inside the outlet-side reactor unit member 20 up to near the reaction chamber 18. The monitor 73 is used as an alarm to provide a safety precaution in the event that excessive heating should occur due to an abnormal reaction in the reactor. The monitor 73 comprises a sleeve 73a, a monitor body 73b, and a temperature measurement section 73c. Because the target gas temperature sensor 70, the unreacted gas sensor 72, and the reactor overheating monitor 73 are all temperature measurement sensors, any known temperature measurement sensor can be employed such as thermocouples, resistance thermometers, thermistors, and semiconductor thermometers. Various thermocouples can be used, such as alumel/chromel thermocouples, copper/ constantan thermocouples, and iron/constantan thermocouples.

As described above, the reaction promoting catalyst layer 74 is formed on the reduced-diameter temperature measurement section 72c of the unreacted gas sensor 72 so as to forcibly react any unreacted hydrogen gas. Any catalyst can be used for this reaction promoting catalyst layer 74 as long as its catalytic action will forcibly react minute amounts of unreacted hydrogen gas and oxygen gas.

The reaction in the water-producing reactor is conducted at a temperature of 350 to 400°C and at a water vapor flow from several dozen sccm to several thousand sccm. Accordingly, a platinum coating catalyst layer is preferable as the reaction promoting catalyst layer 74 from the standpoints of heat resistance and reactivity. This platinum coating catalyst layer is, so as to prevent the underlying substance from affecting the reaction, formed by first forming a barrier film 74a over the underlying substance and then by forming a platinum coating film 74b over the barrier film 74a.

When a platinum/rhodium-based thermocouple is used for the unreacted gas sensor 72, the platinum that makes up the thermocouple will itself become the reaction promoting catalyst; thus, the platinum will function as the reaction promoting catalyst layer 74. In this case, therefore, there is no need to form a separate reaction promoting catalyst layer.

The barrier film 74a serves to prevent metal from being diffused from the underlying metal into the platinum coating film 74b; and it is made up of an oxide or nitride such as TiN, TiC, TiCN, TiAlN, Al₂O₃, Cr₂O₃, SiO₂, CrN, and the like. This film is preferably about 0.1 to 5 µm in thickness. The barrier function will suffer under 0.1 µm, but exceeding 5µm will provide almost no further effect in preventing metal diffusion. The barrier film 74a is formed by ion plating, sputtering, vacuum vapor deposition or other PVD methods, chemical vapor deposition (CVD), hot pressing, etc.

The platinum coating film 74b is preferably 0.1 to 3 µm in thickness. The catalytic action will not last very long if the thickness is 0.1 µm or less and shows almost no change if the thickness is 3 µm or greater. The platinum coating film 74b can be formed as desired by ion plating, sputtering, vacuum vapor deposition, chemical vapor deposition, hot pressing, plating, etc.

The water-producing reactor 2 according to this embodiment is completely covered by the cylindrical heater 60, and both ends thereof are closed off by the inlet-side lid and the outlet-side lid 64. In other words, the reactor 2 and the unreacted gas detector 40 are entirely enclosed inside this cylindrical heater 60; as a result, the temperature uniformity is extremely high inside the reactor 2.

The cylindrical heater 60 is installed in order to induce the initial reaction more effectively. In a water-producing reaction, the reaction chamber 18 must be set to a temperature of 350 to 400°C. At the start of the reaction, the reaction chamber 18 is set to approximately 350°C by the cylindrical heater 60, and hydrogen gas and oxygen gas are reacted to produce water. As the reaction proceeds, the temperature in the reaction chamber rises due to the generated heat, and the cylindrical heater 60 is turned on and off so as to keep the temperature at 350 °C . Thus the inside of the reactor is kept at a constant equilibrium temperature.

Therefore, if heat generation occurs locally inside the measurement space 46, the temperature at these places will rise in deviation from the above-described uniform temperature, that allows the unreacted gas sensor 72 to effectively catch such temperature rises. Also, this local heat generation only occurs at the distal end of the unreacted gas sensor 72, and the thermal capacity thereof is far smaller than the overall water-producing reactor 2. Thus, the temperature uniformity of the reactor unit 2 is maintained, and the temperature measurement section 70c of the target gas temperature sensor 70 always measures a uniform temperature accurately.

If the target gas temperature measured by the target gas temperature sensor 70 is T₀, and the temperature of the unreacted gas sensor 72 after being elevated by the reaction of the unreacted gas is T, then the temperature difference ΔT is calculated by the equation ΔT = T - T₀. This temperature difference ΔT is correlated to the amount of unreacted gas and is proportional to this amount. The unreacted gas concentration is found from { (amount of unreacted gas) / (amount of target gas) } × 100 (%); thus, the temperature difference ΔT is proportional to the unreacted gas concentration. Therefore, the unreacted gas concentration can be detected from the temperature difference ΔT.

The target gas temperature T₀ can be directly measured by the target gas temperature sensor 70, and it can also be estimated quite precisely from the operating conditions of the reactor 2. If hydrogen gas and oxygen gas are supplied, as the material gas, at a specific flux to the reactor at a specific starting temperature, the reaction heat will cause the reactor to reach a specific equilibrium temperature. With a given reactor, the equilibrium temperature of the reactor will be in a one-on-one relationship with the operating conditions, such as the starting temperature and material gas flux.
Accordingly, by way of determining this relationship beforehand, the final equilibrium temperature can be estimated from the operating conditions.

This means that even in the absence of the target gas temperature sensor 70, the reactor temperature, that is, the target gas temperature, can be estimated from the operating conditions. Therefore, by way of measuring the temperature T of the unreacted gas sensor 72 and also estimating the target gas temperature T₀ from the operating conditions, the temperature difference ΔT can be calculated by the equation T - T₀, thus finding the unreacted gas concentration.

In other words, with the present invention, the target gas temperature T₀ can be measured by the target gas temperature sensor 70, or it can be estimated from the operating conditions of the reactor or reactor unit.

Figure 7 shows another unreacted gas sensor. This unreacted gas sensor 72 has a temperature measurement section 72d whose diameter is the same as the cross sectional diameter of the sensor main body 72b but in every other respect is the same as the reduced-diameter temperature measurement section 72c shown in Figure 6. The reaction velocity is not as high as with the reduced-diameter temperature measurement section, but performance is adequate for the detection of unreacted gas.

On the same-diameter temperature measurement section 72d of the sensor 72 of Figure 7, a reaction promoting catalyst layer 74 is provided just as on the reduced-diameter temperature measurement section 72c of the sensor 72 shown in Figure 6. This reaction promoting catalyst layer 74 consists of a platinum coating catalyst layer, for example; and in one specific, preferable structure of this platinum coating catalyst layer, the platinum coating film 74b is formed over the barrier film 74a. These films 74a and 74b are formed from the same materials and by the same methods as the sensor shown in Figure 6 and thus not described here in detail.

Test examples of the effect of the above unreacted gas detector will now be described. In the following description, the target gas temperature T₀ is measured by the target gas temperature sensor 70.

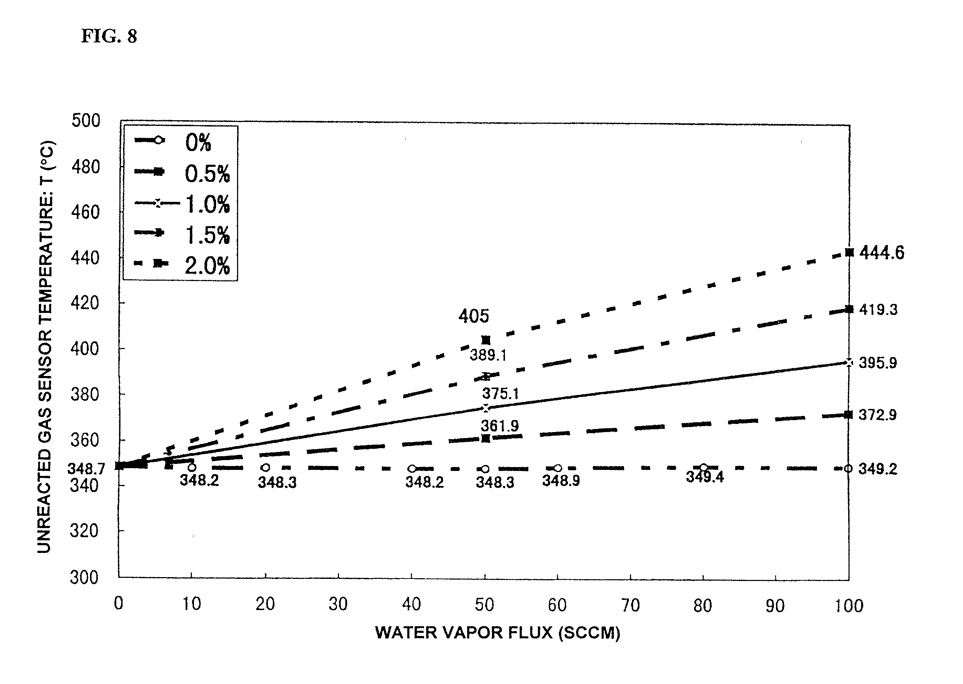

Figure 8 is a graph showing the relationship between water vapor flux and the temperature of an unreacted gas sensor that has the reduced-diameter temperature measurement section 72c shown in Figure 6. The unreacted gas sensor 72 that has the reduced-diameter temperature measurement section 72c is installed in the measurement space 46. The vertical axis represents the unreacted gas sensor temperature T (°C), which is elevated by the reaction of the unreacted gas at the platinum coating catalyst layer 74. The horizontal axis represents the water vapor flux, which is given in units of sccm.

The unreacted hydrogen gas flux was tested versus water vapor flux at five stages, from 0 to 2.0%. The two-dot chain line is for 0%, the long dashed line 0.5%, the solid line 1.0%, the one-dot chain line 1.5% and the short dashed line 2.0%. The water vapor flux was measured at seven stages: 10, 20, 40, 50, 60, 80 and 100 (sccm).

The reactor 2 is set to approximately 350°C at the initial stage by the cylindrical heater 60, after which reaction heat is generated as the water-producing reaction proceeds, so the cylindrical heater 60 is turned on and off so as to keep the entire reactor 2 at about 350°C.

As seen from Figure 8, when the unreacted hydrogen gas concentration is 0% (shown by the two-dot chain line), there is no forced combustion of the unreacted gas even if the amount of water production varies; thus, the temperature remains substantially constant, and the water vapor is at a constant temperature averaging 348.7°C within a margin of error of 0.15%. The combusted gas temperature T increases when just a tiny amount of unreacted hydrogen gas is admixed. Since the temperature at 0% is the target temperature T₀, the temperature difference ΔT is calculated as T - T₀.

At 50 sccm water production, when the unreacted hydrogen gas concentration is 2%, then ΔT = 405 - 348.3 = 56.7 (°C). At 100 sccm water production, when the unreacted hydrogen gas concentration is 2%, then ΔT = 444.6 - 349.2 = 95.4 (°C). It can be seen that the temperature difference ΔT is 95.4/56.7 = 1.68 and that even if the amount of water vapor doubles, the temperature increase is less than double.

This indicates that the total amount of hydrogen gas admixed in the water vapor is not forcibly combusted by the unreacted gas sensor 72. However, it goes without saying that it is preferable to bring the reactivity closer to 100% by improving the reaction promoting catalyst layer 74. Regardless of the unreacted hydrogen gas concentration, though, as the amount of water produced increases, the sensor temperature T also increases. This temperature curve can be utilized to calculate the unreacted hydrogen gas concentration from the amount of water produced and the measured temperature difference ΔT. This is applicable not only to a water-producing reactor but also to a reactor that produces any other type of target gas.

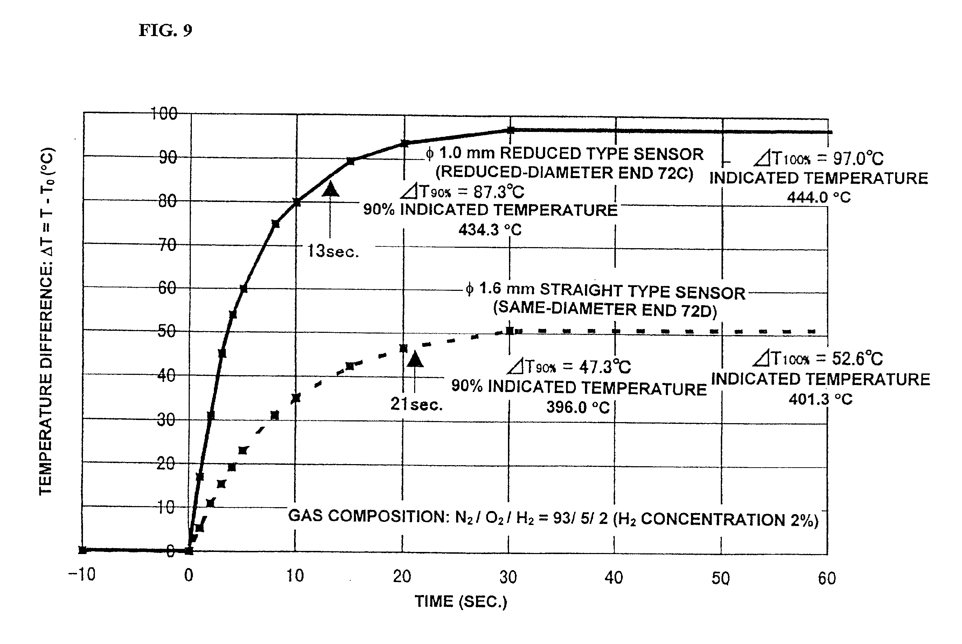

Figure 9 is a response graph for unreacted gas sensors, in which the reduced-diameter temperature measurement section 72c of the sensor 72 (see Figure 6) is compared to the same-diameter temperature measurement section 72d of the sensor 72 (see Figure 7). The solid line represents the response curve for an unreacted gas sensor that has the reduced-diameter temperature measurement section (reducer type) 72c shown in Figure 6, while the broken line represents the response curve for an unreacted gas sensor that has the same-diameter temperature measurement section (straight type) 72d shown in Figure 7. From -10 seconds to 0 seconds, 100% N₂ gas flows through the reactor 2; and after 0 seconds, a mixed gas containing 5% O₂ gas and 2% H₂ gas as unreacted gas in 93% N₂ gas flows through the reactor.

The vertical axis represents the temperature difference ΔT = T - T₀ (°C), while the horizontal axis represents the elapsed time (seconds). T₀ is set by the cylindrical heater 60 to 348.7°C for the same-diameter temperature measurement section 72d and is set to 347°C for the reduced-diameter temperature measurement section 72c. This state is indicated by the straight line of ΔT = 0 (°C) from -10 seconds to 0 seconds. When hydrogen gas and oxygen gas were admixed as unreacted gas, the temperature elevation ΔT was measured over time from the individual target gas temperatures T₀.

The saturation temperature was ΔT = 97.0°C with the reduced-diameter temperature measurement section 72c and was ΔT = 52.6°C with the same-diameter temperature measurement section 72d. Because it has a smaller thermal capacity, the reduced-diameter temperature measurement section 72c has a correspondingly higher saturation temperature than the same-diameter temperature measurement section 72d. In order to compare response velocity, the time it takes to reach 90% of the saturation temperature is defined as the response time.

With the reduced-diameter temperature measurement section 72c, ΔT90% = 87.3°C, and the response time τ is 13 seconds. Meanwhile, ΔT90% = 47.3°C and the response time τ is 21 seconds with the same-diameter temperature measurement section 72d. The response time of the reduced-diameter temperature measurement section 72c is thus 62% (13/21) of that of the same-diameter temperature measurement section 72d.

If the response velocity V is defined as ΔT90%/τ, then V = 6.7 (°C/s) with the reduced-diameter temperature measurement section 72c, whereas V = 2.3 (°C/s) with the same-diameter temperature measurement section 72d. Therefore, the response velocity of the reduced-diameter temperature measurement section 72c is 2.9 times that of the same-diameter temperature measurement section 72d, that demonstrates the effectiveness of the unreacted gas sensor 72 having the reduced-diameter temperature measurement section 72c shown in Figure 6.

The unreacted gas detector and unreacted gas sensor according to the present invention are not limited to those described in the above embodiments. All variations and design modifications within the scope of the technological concept of the present invention are encompassed in the technological scope of the present invention.

As seen from the above, according to the present invention, an unreacted gas sensor is disposed in the measurement space, while a target gas temperature sensor is disposed near the flow path of the sensor body or the reactor unit. Accordingly, reaction heat generated by the temperature measurement section of the unreacted gas sensor has no influence to the target gas temperature sensor, allowing the target gas temperature to be measured accurately. In other words, because the unreacted gas concentration calculated from the temperature difference thereof can also be determined accurately, an alarm is actuated accurately and quickly in the event that combustible unreacted gas should exceed the prescribed level. It is, therefore, possible to markedly improve the safety of a target gas-producing reactor.

Also, in the present invention, the correlation between the operating conditions of the reactor and the target gas temperature is corrected ahead of time, and the target gas temperature is estimated from the operating conditions of the reactor on the basis of this corrected data. Accordingly, a target gas temperature sensor is unnecessary, thus simplifying the structure of unreacted gas detectors and lowering the costs.

Furthermore, the unreacted gas detector is applied to a water-producing reactor in the present invention. Accordingly, even if dangerous hydrogen gas remains as an unreacted gas along with oxygen gas, the hydrogen gas concentration can be accurately monitored, and an alarm is actuated accurately and quickly if the concentration limit is exceeded.

In addition, according the present invention, the temperature measurement section of the unreacted gas sensor has a reduced diameter. Accordingly, the thermal capacity of the temperature measurement section is relatively small; and even if a trace amount of combustible unreacted gas remains in the target gas, the resulting tiny amount of reaction heat can be sensed at high speed and sensitivity.

Furthermore, the reaction promoting catalyst layer of the unreacted gas sensor is formed from a platinum coating catalyst layer. Thus, the combustible unreacted gas can be reacted at high speed by the catalytic action of this layer, allowing the unreacted gas concentration to be measured from this reaction heat at a high level of sensitivity.

Furthermore, in the present invention, the unreacted gas sensor is comprised of a thermocouple. Thus, a variety of thermocouples capable of measuring various temperature ranges can be utilized, affording greater diversity to the unreacted gas sensor. In particular, if a thermocouple containing platinum is used, since this platinum can itself be used for the reaction promoting catalyst layer, there is no need for a separate reaction promoting catalyst layer to be provided, that simplifies the structure of the unreacted gas sensor and lowers its cost.
As seen from the above, the present invention provides many outstanding practical benefits.

## Claims

1. An unreacted gas detector comprising:
a reactor unit that produces a target gas by way of reacting material gases in a reaction chamber thereof;
a sensor body provided in contact with said reactor unit;
a measurement space provided in said sensor body so as to allow said target gas to flow therethrough;
an unreacted gas sensor having a temperature measurement section that is covered by a reaction promoting catalyst layer and is disposed inside said measurement space; and
a target gas temperature sensor for sensing a gas temperature by means of a temperature measurement section thereof, said temperature measurement section being disposed in said reactor unit or in a predetermined section of said sensor body,
wherein any unreacted gas remaining in said target gas is reacted by said reaction promoting catalyst layer so that a resulted temperature change is detected by said temperature measurement section of said unreacted gas sensor, and a target gas temperature is measured by said temperature measurement section that is of said target gas temperature sensor and disposed in said reactor unit or in said sensor body, thus finding a unreacted gas concentration from a temperature difference between a temperature obtained by said unreacted gas sensor and a temperature of said target gas.

2. An unreacted gas detector comprising:
a reactor unit that produces a target gas by way of reacting material gases in a reaction chamber thereof;
a sensor body provided in contact with said reactor unit;
a measurement space provided in said sensor body so as to allow said target gas to flow therethrough; and
an unreacted gas sensor having a temperature measurement section that is covered by a reaction promoting catalyst layer and is disposed inside said measurement space,
wherein any unreacted gas remaining in said target gas is reacted by said reaction promoting catalyst layer so that a resulted temperature change is detected by said temperature measurement section of said unreacted gas sensor, and a target gas temperature is estimated from operating conditions of said reactor unit, thus finding a unreacted gas concentration from a temperature difference between a temperature obtained by said unreacted gas sensor and an estimated temperature of said target gas.

3. The unreacted gas detector according to Claim 1 or 2, wherein said reactor unit is a water-producing reacting reactor that produces water vapor from hydrogen gas and oxygen gas, and said unreacted gas is one selected from the group consisting of unreacted hydrogen gas and unreacted oxygen gas.

4. The unreacted gas detector according to Claim 1 or 2, wherein said reactor unit is a water-producing reacting reactor that comprises:
an inlet-side reactor unit member that supplies said material gases to an inlet-side space;
an outlet-side reactor unit member that sends a produced water vapor to a water vapor supply path;
a reflector sandwiched in an airtight fashion between said inlet-side reactor unit member and said outlet-side reactor unit member, said reflector being provided with a plurality of spray holes that communicates with said inlet-side space;
a reaction chamber having a gap between said reflector and said outlet-side reactor unit member;
a nozzle hole formed in said outlet-side reactor unit member so that a water vapor supply path of said outlet-side reactor unit member communicates with said reaction chamber; and
a coating catalyst layer provided on an end surface of said outlet-side reactor unit member that faces said reflector,
wherein water vapor is produced by a reaction of said material gases under a non-combustion state, said reaction being occurred by a catalytic action of said coating catalyst layer when said material gases flow into said reaction chamber through said spray holes of the reflector.

5. An unreacted gas sensor comprising:
an elongated sensor main body;
a temperature measurement section provided at a tip end of said sensor main body, said temperature measurement section having a reduced diameter; and
a temperature measuring catalyst layer provided in said temperature measurement section.

6. The unreacted gas sensor according to Claim 5, wherein said temperature measuring catalyst layer is a platinum coating catalyst layer.

7. The unreacted gas sensor according to Claim 5 or 6, wherein said unreacted gas sensor is comprised of a thermocouple.
